# EUROPEAN PATENT APPLICATION

(11) **EP 1 440 877 A1**
(43) Date of publication of application: **28.07.2004**
(21) Application number: 03250376.5
(22) Date of filing: 21.01.2003
(51) Int. Cl.: B62K 21/12, B62J 29/00

(54) **Handle assembly**

(71) Applicant: Kwang Yang Motor Co., Ltd., Kaohsiung City (TW)
(72) Inventor: Lin, Tsang-Mao, Kaohsiung City (TW); Chen, Jui-Tien, Kaohsiung City (TW)
(74) Representative: Abbie, Andrew Kenneth

(57) **Abstract**

A handle assembly (4) includes a support bar (41) with two hand grip end portions (411), two grip connecting tubes (421) respectively disposed outboard to the hand grip end portions (411), two grip bars (420) integrally and respectively formed with the grip connecting tubes (421), and two tightening members (44) disposed to bring the grip connecting tubes (421) from an disengaging position to permit angular displacement of the tubes (421) relative to the hand grip end portions (411) , to an engaging position to secure the tubes (421) in an angular position. Two retaining units are disposed to prevent angular displacement of the tubes (421) in the engaging position.

## Description

This invention relates to a handle assembly, more particularly to a handle assembly for an electric motor-driven wheeled vehicle with a pair of grip bars detachably mounted on two hand grip end portions of a support bar.

A conventional handle for an electric motor-driven wheeled vehicle generally includes a support bar which is mounted on a head tube of a mount frame of the vehicle and which has right and left hand grip end portions at two opposite ends thereof. A variety of the support bars, such as I-shaped and U-shaped bars, can be selected for mounting on the head tube so as to suit different users. However, disassembling the support bar from the head tube and mounting another in place is inconvenient to conduct.

The obj ect of the present invention is to provide a handle assembly which can be adjusted with relative ease so as to suit different users.

According to this invention, the handle assembly includes a support bar, right and left grip connecting tubes, right and left grip bars, right and left tightening members, and right and left retaining units.

The support bar has right and left hand grip end portions which respectively define right and left axes and which are disposed opposite to each other in a longitudinal direction, and a middle connecting segment which is interposed between the right and left hand grip end portions and which is adapted to be secured to a top end of a head tube of an electric motor-driven wheeled vehicle.

Each of the right and left grip connecting tubes has a proximate end wall which is disposed outboard to a respective one of the right and left hand grip end portions, and a distal end wall which is opposite to the proximate end wall along a respective one of the right and left axes.

The right and left grip bars respectively have right and left transverse connecting segments, each of which is integrally formed with and extends from a respective one of the right and left grip connecting tubes in a transverse direction relative to the longitudinal direction.

Each of the right and left tightening members is operable to bring a respective one of the right and left grip connecting tubes from an disengaging position, where the proximate end wall of the respective one of the right and left grip connecting tubes is disengaged from the respective one of the right and left hand grip end portions so as to permit an angular displacement of the respective one of the right and left grip connecting tubes relative to the respective one of the right and left hand grip end portions about the respective one of the right and left axes from a first angular position to a second angular position, to an engaging position, where the proximate end wall is in engagement with the respective one of the right and left hand grip end portions so as to secure the respective one of the right and left grip connecting tubes in one of the first and second angular positions.

The right retaining unit is disposed between the right hand grip end portion and the proximate end wall of the right grip connecting tube, and is configured to prevent angular displacement of the right grip connecting tube when the right grip connecting tube is in the engaging position.

The left retaining unit is disposed between the left hand grip end portion and the proximate end wall of the left grip connecting tube, and is configured to prevent angular displacement of the left grip connecting tube when the left grip connecting tube is in the engaging position.

Other features and advantages of the present invention will become apparent in the following detailed description of the preferred embodiment of the invention, with reference to the accompanying drawings, in which:
Fig. 1 is a perspective view of a preferred embodiment of a handle assembly according to this invention when incorporated in a mount frame of an electric motor-driven wheeled vehicle;
Fig. 2 is an exploded perspective view of the preferred embodiment;
Fig. 3 is a partially sectioned view of a right portion of the preferred embodiment;
Fig. 4 is a partially sectioned view of a left portion of the preferred embodiment;
Fig. 5 is an exploded perspective view of a retaining unit of the preferred embodiment;
Fig. 6 is a schematic view illustrating the handle assembly of the preferred embodiment when adjusted; and
Fig. 7 is a perspective view of the preferred embodiment in a state of use.

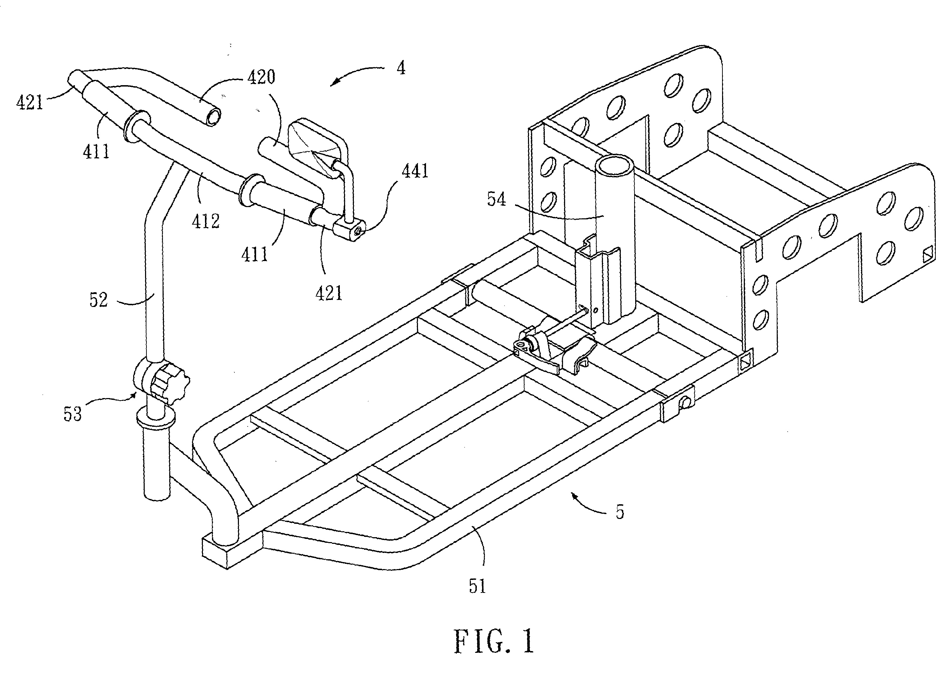

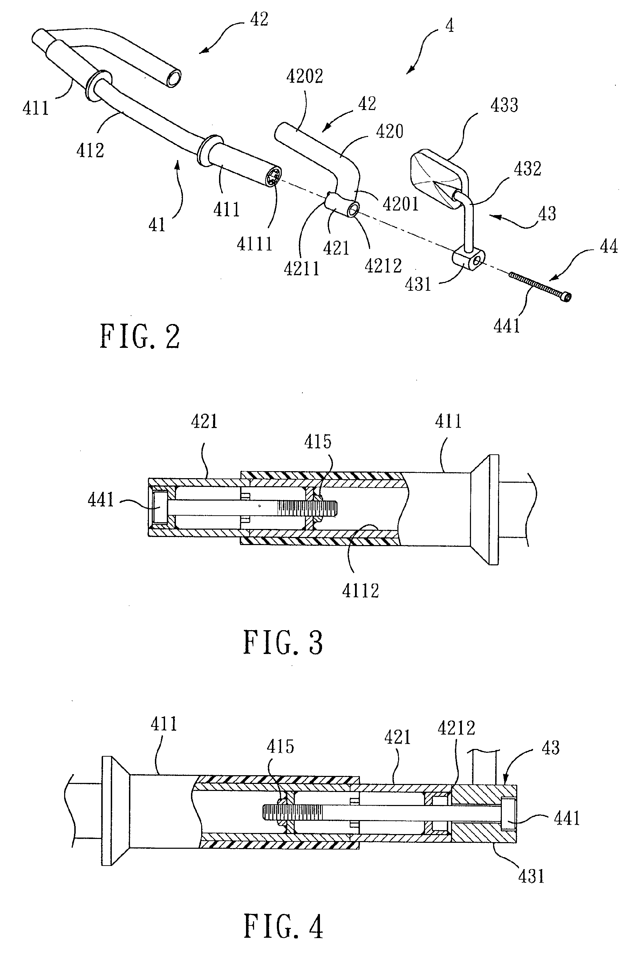

Referring to Figs. 1 and 2, the preferred embodiment of a handle assembly 4 according to the present invention is shown to be mounted on a mount frame 51 of an electric motor-driven wheeled vehicle 5. The mount frame 51 is provided with a head tube 52 which extends in an upright direction and which is rotatable relative to the mount frame 51 about a swiveling axis in a known manner. The handle assembly 4 is shown to comprise a support bar 41, right and left grip units 42, a rear view mirror 43, and right and left tightening members 44.

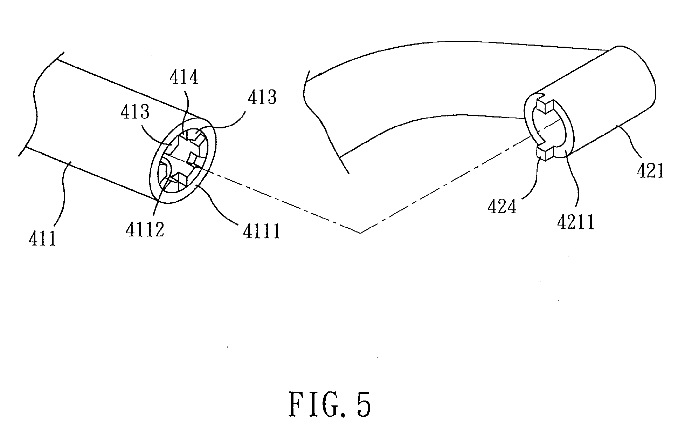

The support bar 41 has right and left hand grip end portions 411 which respectively define right and left axes, and which are disposed opposite to each other in a longitudinal direction that is transverse to the upright direction, and a middle connecting segment 412 which is interposed between the right and left hand grip end portions 411 and which is adapted to be secured to a top end of the head tube 52. In this embodiment, the support bar 41 is secured to the head tube 52 by welding. With further reference to Fig. 5, each of the right and left hand grip end portions 411 has a surrounding abutting surface 4111 and an inner surrounding wall surface 4112 which extends from the surrounding abutting surface 4111 towards the middle connecting segment 412 and which surrounds a respective one of the right and left axes. A plurality of first protruding members 413 are formed on the inner surrounding wall surface 4112 of a respective one of the right and left hand grip end portions 411, and are angularly displaced from one another relative to the respective one of the right and left axes. Each of the first protruding members 413 extends in the longitudinal direction so as to confine a receiving space 414 between two adjacent ones of the first protruding members 413.

The right and left grip units 42 respectively include right and left grip connecting tubes 421 and right and left grip bars 420.

Each of the right and left grip connecting tubes 421 has a proximate end wall 4211 which is disposed outboard to the surrounding abutting surface 4111 of a respective one of the right and left hand grip end portions 411, and a distal end wall 4212 which is opposite to the proximate end wall 4211 along a respective one of the right and left axes. Two diametrically opposite second protruding members 424 are formed on and extend from the proximate end wall 4211 outwardly and in the longitudinal direction, and are configured to be received in two diametrically opposite ones of the receiving spaces 414 so as to cooperatively serve as a respective one of right and left retaining units for retaining the respective one of the right and left grip connecting tubes 421 at a desired one of angular positions relative to the respective one of the right and left hand grip end portions 411.

The right and left grip bars 420 respectively have right and left transverse connecting segments 4201 and right and left longitudinal grip segments 4202. In particular, each of the right and left transverse connecting segments 4201 is integrally formed with and extends from a respective one of the right and left grip connecting tubes 421 in a transverse direction relative to the longitudinal direction to terminate at a distal end. Each of the right and left longitudinal grip segments 4202 extends from the distal end in the longitudinal direction so as to be substantially parallel to the respective one of the right and left hand grip end portions 411.

With reference to Figs. 3 and 4, each of the right and left tightening members 44 includes a screw nut 415 which is secured in a respective one of the right and left hand grip end portions 411, and a screw bolt 441 which passes through a respective one of the right and left grip tubes 421 in the longitudinal direction and which threadedly engages the screw nut 415. As shown in Figs. 2 and 4, the rear view mirror 43 includes a tubular connecting portion 431 which is disposed outboard to the distal end wall 4212 of the left grip connecting tube 421 and which has a through hole for passage of the screw bolt 441, a mirror portion 433, and a connecting stem 432 connecting the mirror portion 433 to the tubular connecting portion 431.

Thus, each of the right and left tightening members 44 can bring a respective one of the right and left grip connecting tubes 421 from an disengaging position to an engaging position. In the disengaging position, the screw bolt 441 is screwed out of the screw nut 415, and the respective proximate end wall 4211 is disengaged from the respective one of the right and left hand grip end portions 411 so as to permit an angular displacement of the respective one of the right and left grip connecting tubes 421 relative to the respective one of the right and left hand grip end portions 411 about the respective one of the right and left axes from one angular position to another angular position. In the engaging position, the screw bolt 441 threadedly engages the screw nut 415, and the proximate end wall 4211 is in engagement with the respective one of the right and left hand grip end portions 411 so as to secure the respective one of the right and left grip connecting tubes 421 in one of the angular positions.

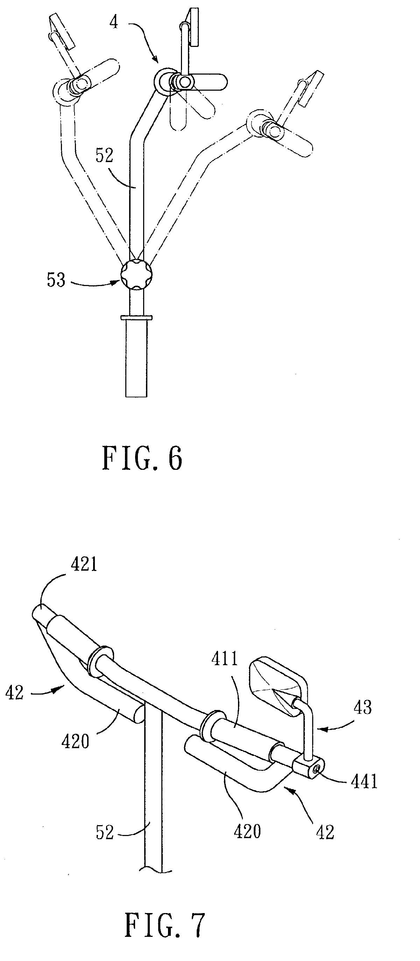

Preferably, referring to Figs. 1 and 6, the head tube 52 is mounted on the mount frame 51 by an adjusting member 53, which is operable to permit swiveling of the head tube 52, thereby permitting adjustment of the position of the handle assembly 4 relative to a seat post 54 of the mount frame 51.

As illustrated, when it is desired to adjust the right and left grip units 42 at a desired angular position relative to the respective right and left hand grip end portions 411, such as the position shown in Fig. 7, the screw bolts 441 are loosened to permit the angular displacement of the right and left grip connecting tubes 421 to the desired angular positions. The engagement between the first and second protruding members 413,424 can prevent the angular displacement of the right and left grip connecting tubes 421. The screw bolts 441 are then tightened to secure the right and left grip connecting tubes 421 in the engaging position. As such, the handle assembly 4 of this invention is easily adjustable to suit different users.

## Claims

1. A handle assembly (4) for an electric motor-driven wheeled vehicle (5) which includes a mount frame (51) provided with a head tube (52) that extends in an upright direction and that is rotatable relative to the mount frame (51) about a swiveling axis, said handle assembly (4) comprising a support bar (41) having right and left hand grip end portions (411) which respectively define right and left axes, and which are disposed opposite to each other in a longitudinal direction that is transverse to the upright direction, and a middle connecting segment (412) which is interposed between said right and left hand grip end portions (411) and which is adapted to be secured to a top end of the head tube (52), said handle assembly (4) being **characterized by**:
said handle assembly (4) further comprising:
right and left grip connecting tubes (421) , each having a proximate end wall (4211) which is disposed outboard to a respective one of said right and left hand grip end portions (411), and a distal end wall (4212) which is opposite to said proximate end wall (4211) along a respective one of the right and left axes,
right and left grip bars (420) respectively having right and left transverse connecting segments (422), each of said right and left transverse connecting segments (4201) being integrally formed with and extending from a respective one of said right and left grip connecting tubes (421) in a transverse direction relative to the longitudinal direction;
right and left tightening members (44), each of which is operable to bring a respective one of said right and left grip connecting tubes (421) from an disengaging position, where said proximate end wall (4211) of the respective one of said right and left grip connecting tubes (421) is disengaged from the respective one of said right and left hand grip end portions (411) so as to permit an angular displacement of the respective one of said right and left grip connecting tubes (421) relative to the respective one of said right and left hand grip end portions (411) about the respective one of the right and left axes from a first angular position to a second angular position, to an engaging position, where said proximate end wall (4211) is in engagement with the respective one of said right and left hand grip end portions (411) so as to secure the respective one of said right and left grip connecting tubes (421) in one of the first and second angular positions;
a right retaining unit disposed between said right hand grip end portion (411) and said proximate end wall (4211) of said right grip connecting tube (421), and configured to prevent angular displacement of said right grip connecting tube (421) when said right grip connecting tube (421) is in the engaging position; and
a left retaining unit disposed between said left hand grip end portion (411) and said proximate end wall (4211) of said left grip connecting tube (421), and configured to prevent angular displacement of said left grip connecting tube (421) when said left grip connecting tube (421) is in the engaging position.

2. The handle assembly of Claim 1, **characterized in that**
each of said right and left hand grip end portions (411) has a surrounding abutting surface (4111) which confronts said proximate end wall (4211) of a respective one of said right and left grip connecting tubes (421), and an inner surrounding wall surface (4112) which extends from said surrounding abutting surface (4111) towards said middle connecting segment (412) and which surrounds the respective one of the right and left axes,
each of said right and left retaining units including
a plurality of first protruding members (413) which are formed on said inner surrounding wall surface (4112) of the respective one of said right and left hand grip end portions (411) and which are angularly displaced from one another relative to the respective one of the right and left axes, each of said first protruding members (413) extending in the longitudinal direction so as to confine a receiving space (414) between two adjacent ones of said first protruding members (413), and
a second protruding member (424) which is formed on and which extends from said proximate end wall (4211) of the respective one of said right and left grip connecting tubes (421) outwardly and in the longitudinal direction, and which is configured to be received in a selected one of said receiving spaces (414) when the respective one of said right and left grip connecting tubes (421) is in one of the first and second angular positions.

3. The handle assembly (4) of Claim 2, **characterized in that** each of said right and left tightening members (44) includes a screw nut (415) secured in a respective one of said right and left hand grip end portions (411), and a screw bolt (441) passing through a respective one of said right and left grip tubes (421) in the longitudinal direction and threadedly engaging said screw nut (415) .

4. The handle assembly (4) of Claim 3, further **characterized by** a rear view mirror (43) that includes a tubular connecting portion (431) which is disposed outboard to said distal end wall (4212) of said left grip connecting tube (421) and which has a through hole for passage of said screw bolt (441) therethrough.

5. The handle assembly (4) of Claim 1, **characterized in that** each of said right and left transverse connecting segments (422) terminates at a distal end, each of said right and left grip bars (42) further having a longitudinal grip segment (4202) which extends from said distal end in the longitudinal direction so as to be substantially parallel to the respective one of said right and left hand grip end portions (411).
